# EUROPEAN PATENT SPECIFICATION

(11) **EP 3 798 508 B1**
(45) Date of publication and mention of the grant of the patent: **04.05.2022**
(21) Application number: 20163968.9
(22) Date of filing: 18.03.2020
(51) Int. Cl.: F21V 8/00

(54) **PANEL LIGHT ASSEMBLY**
PLATTENLICHTVORRICHTUNG
ENSEMBLE D'ÉCLAIRAGE DE PANNEAU

(30) Priority: 27.09.2019 CN 201921625011 U; 27.09.2019 CN 201921626190 U
(43) Date of publication of application: 31.03.2021
(73) Proprietor: Xiamen Eco Lighting Co., Ltd., Xiamen (CN)
(72) Inventor: Luo, Tong, Xiamen (CN); Dong, Yongzhe, Xiamen (CN); Zhang, Lei, Xiamen (CN)
(74) Representative: Roberts, Peter David

(56) References cited:
- US-A1- 2009 256 987
- US-A1- 2016 139 330
- US-A1- 2016 299 287

## Description

### FIELD OF INVENTION

The present invention relates to a panel light assembly and more particularly to a panel light assembly with good heat dissipation function.

### BACKGROUND

LED (Light Emitting Diode) is popular today and widely used in various fields to replace traditional light devices. For example, a panel light device provides soft light by guiding light from a light guide element. This makes panel light devices a great tool for providing light to human life while not hurting people's eyes or making people uncomfortable.

In addition, LED modules may decrease their life spans if being kept working for long time under high working temperature. Therefore, it is beneficial to design a panel light and other light device with better heat dissipation features and with longer life span.

A prior art reference of US 2016/299287 A1 has disclosed a backlight source which comprises a back plate, a light guide plate and a light strip, where a rigid element is arranged between the light strip and a light-entering surface of the light guide plate. One end of the rigid element is fixed onto the light strip, and the other end of the rigid element is fixed onto the light guide plate, so as to maintain a constant distance between the light strip and the light-entering surface of the light guide plate, an elastic element is arranged between the light strip and the back plate and at a side of the light strip opposite to the light-entering surface of the light guide plate. When the light guide plate is thermally deformed, a deformation force generated by the light guide plate is applied to the rigid element so as to push the light strip to press against the elastic element.

### SUMMARY OF INVENTION

The invention is set forth in the appended claims.

### BRIEF DESCRIPTION OF DRAWINGS

Fig. 1 illustrates a panel light assembly.
Fig. 2 is a top view of the panel light assembly of Fig. 1.
Fig. 3 is a cross-sectional view of the panel light assembly along the AA direction.
Fig. 4 is an enlarged view of a B portion of the panel light assembly of Fig. 3.
Fig. 5 is an exploded diagram of the panel light assembly embodiment.
Fig. 6 is enlarged view of the part D in Fig. 5.
Fig. 7 is an enlarged view of part C in Fig. 5.
Fig. 8 is an assembly diagram of the panel light embodiment of Fig. 5.
Fig. 9 is an enlarged view of the E portion in Fig. 8.

### DETAILED DESCRIPTION

Embodiments of the invention comprise at least the features recited in claim

In some embodiments, the light guide plate may be made of a plastic plate with micro dots formed by applying laser light, or be a transparent plate attached with color or fluorescent layers to change light characteristics like colors

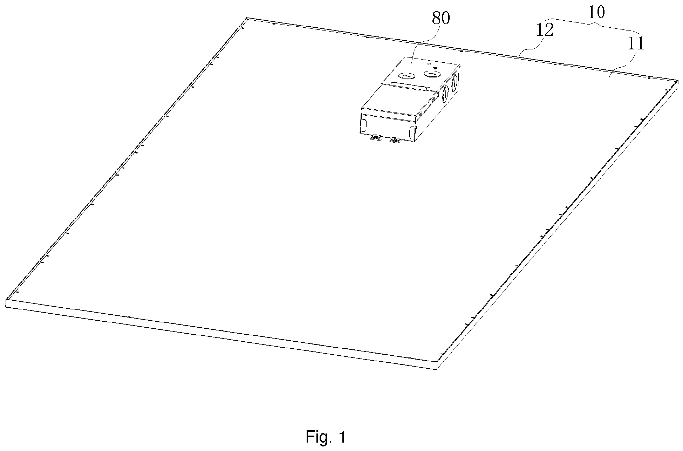

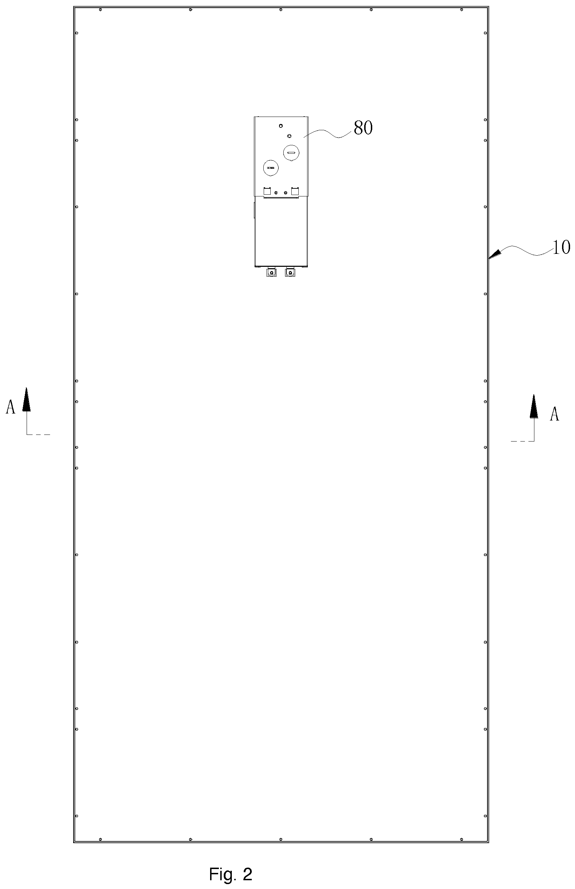

In Fig. 1 to Fig. 4, a panel light embodiment is illustrated. The panel light assembly includes a housing 10, a deformable unit, a light source 50 and a light guide plate 20. The light source 50 may include LED modules and related components and may be implemented with other light components. The deformable unit may be a buffer unit like a sponge block or other elastic component like a spring.

The deformable unit includes a first elastic unit 31 and a second elastic unit 32. The first elastic unit 31 is disposed between an inner side of a panel frame and a back side of the light source 50. The second elastic unit 32 is disposed between a front side of the light source 50 and the light guide plate 20. The second elastic unit 32 may be regarded as a stop unit mentioned above. In other words, the stop unit may be an elastic or rigid structure. The light source 50 includes a light source plate 51, multiple LED components 52 and at least one stop piece 53. The multiple LED modules 52 are arranged on a front side of the light source plate 51. The stop piece 53, which may be regarded as a stop unit example, is also disposed on the front side of the light source plate 51. The multiple LED modules 52 and the stop piece 53 are disposed at the same side of the light source plate 51. A height of the stop piece 53 is larger than a height of the LED modules 52.

When the light guide plate 20 is expanded for thermal expansion and engages the second elastic unit 32, the second elastic unit 32 is deformed by the light guide plate 20, the lateral side of the light guide plate 20 engages the stop piece 53. The deformation of the first elastic unit 31 is larger than the deformation of the second elastic unit 32.

With such arrangement, the LED modules 52 are not damaged when being pressed by the light guide plate 20. The first elastic unit 31 and the second elastic unit 32 are both pressed. However, by controlling the elastic deformation, the first elastic unit 31 is easier to be deformed than the second elastic unit 32. With such design, the distance variation between the light guide plate 20 and the LED modules 52 is reduced compared with just using one elastic unit as the deformable unit as mentioned above.

Such design improves overall optical efficiency. The protection of the LED modules 52 is achieved even when the light guide plate 20 is not reduced for its dimension.

In the illustrated example, the housing 10 has a flat box shape. The cross-sectional view of the housing 10 has a rectangular shape. The bottom of the housing 10 has an opening and a top of the housing is closed. The housing 10 may be made of aluminum material or other metal material. The light guide plate 20 may be made of polyester material. The thickness of the light guide plate 20 is larger than the thickness of the LED modules 52 so that light emitted from the LED modules 52 enters the light guide plate 20.

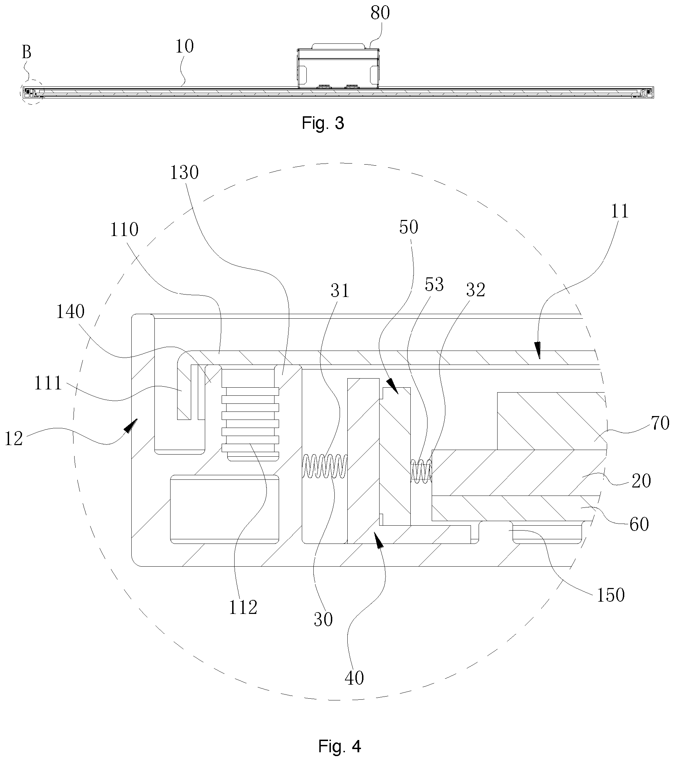

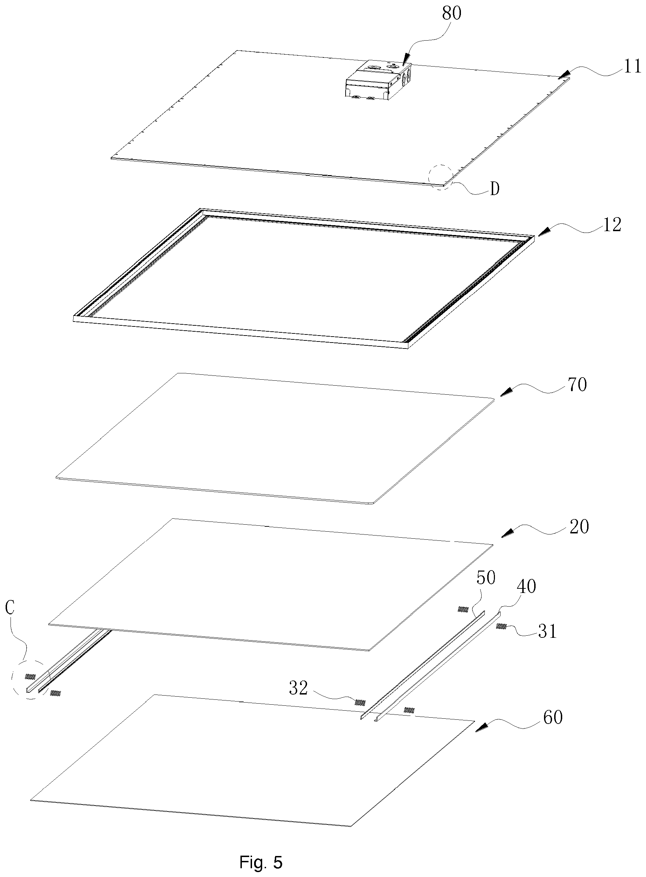

In Fig. 4 and Fig. 5, the panel light assembly also includes a heat dissipation structure 40. The heat dissipation structure 40 is fixed to a back side of the light source 50. Specifically, the heat dissipation structure 40 is fixed at one side away from the LED modules 52. The first elastic unit 31 is disposed between the heat dissipation structure 40 and an inner side of the housing 10. The heat dissipation structure 40 may engage the housing 10 for enhancing heat dissipation effect and increases a life span of the panel light.

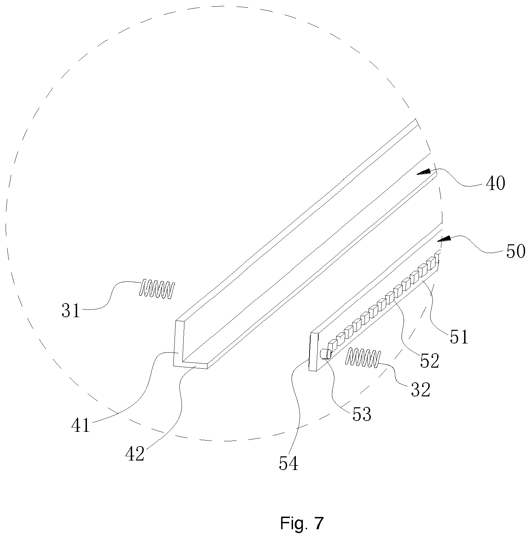

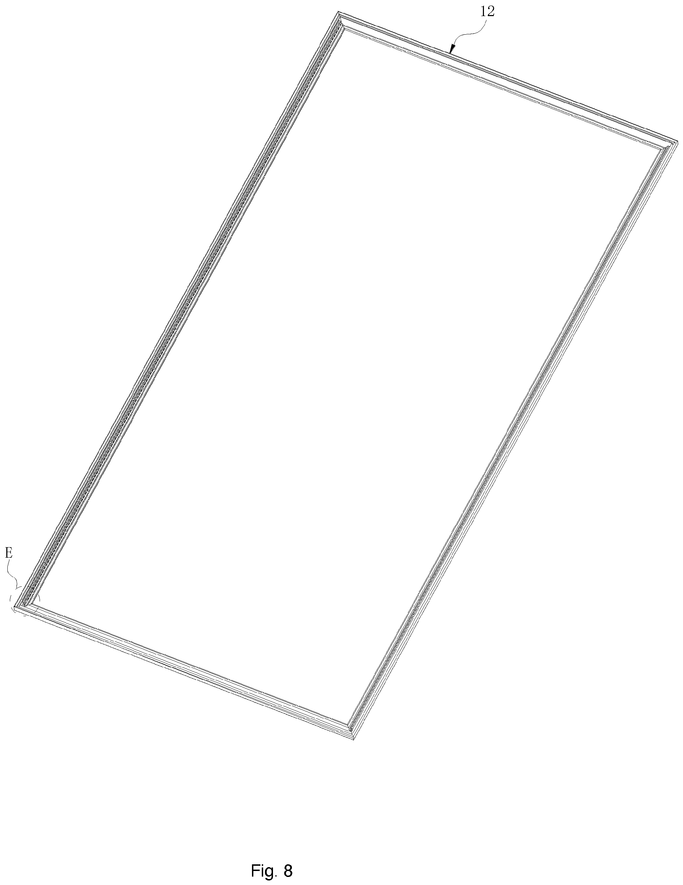

In some embodiments, as shown in Fig. 4, Fig. 5 and Fig. 8, the heat dissipation structure 40 includes an installation plate 41 and a holding plate 42. Specifically, the heat dissipation structure has an L structure. The installation plate 41 is parallel with light emitting direction of the light guide plate 20. The holding plate 42 supports the light source plate 51. The back side of the light source plate 51 is fixed to the installation plate 41. The first elastic unit 31 is disposed between the installation plate 41 and an inner side of the housing 10. The first elastic unit 31 and the second elastic unit 32 together absorbs the pressure caused by thermal expansion of the light guide plate 20. In some embodiments, as shown in Fig. 4 and Fig. 7, the backside of the light source plate 51 is attached to the installation plate 41 with a heat dissipation glue. The heat dissipation glue forms a heat dissipation layer 52 between the light source plate 51 and the heat dissipation structure 40. When the light guide plate 20 is expanded for thermal expansion, the light source 51 moves with the heat dissipation structure 40 within the housing 10.

In some embodiments, the stop piece 53 may be a stop unit formed as an integral piece with the light source plate 51. There may be multiple stop units on the light source plate 51. For example, there are two stop columns on two sides of the LED modules 52 on the light source plate 51.

In some other embodiments, the first elastic unit 31 and the second elastic unit 32 are made of sponge or polyurethane material. The thickness of the first elastic unit 31 and the second elastic unit 32 may be adjusted by using different layers of deformable materials.

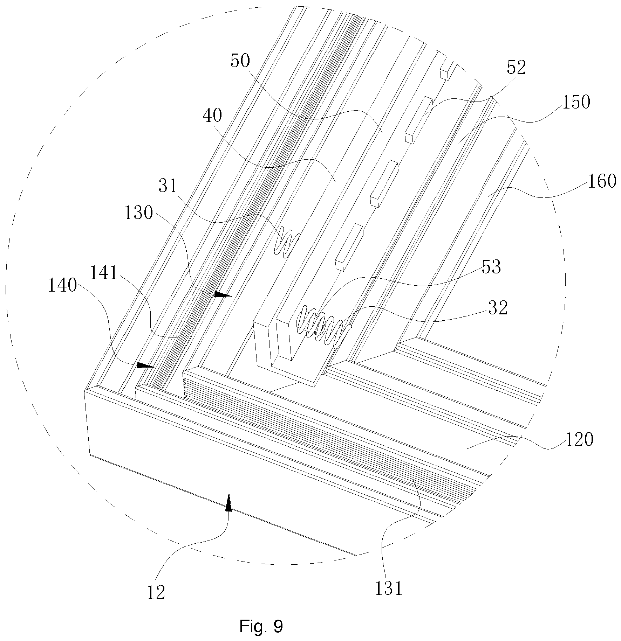

In some other example, the first elastic unit 31 and the second elastic unit 32 may also be spring components, as shown in Fig. 4 and Fig. 9.

In Fig. 4 and Fig. 9, the second spring may be arranged surrounding the stop piece 53 for reducing space so that more space may be reserved for light transmission.

In some embodiments, as shown in Fig. 1, Fig. 4 and Fig. 5, the housing 10 includes a back cover 11 and an outer frame 12. The outer frame 12 has a rectangular shape. The outer frame 12 has a top opening and a bottom opening. The back cover 11 closes the top opening. The back cover 11 and the outer frame 12 together form a container for receiving the light guide plate 20, the light source 50, the heat dissipation structure 40 and the deformable unit.

In some embodiment, as shown in Fig. 4, the panel light may also include a diffusion layer 60 and a reflective layer 70. some heat dissipation structure like metal bars, clips may be placed on the reflective layer 70 for transmitting heat from the light guide plate to other places like the heat dissipation structure mentioned above. With such design, the heat is further transmitted away to increase the life span of the LED modules.

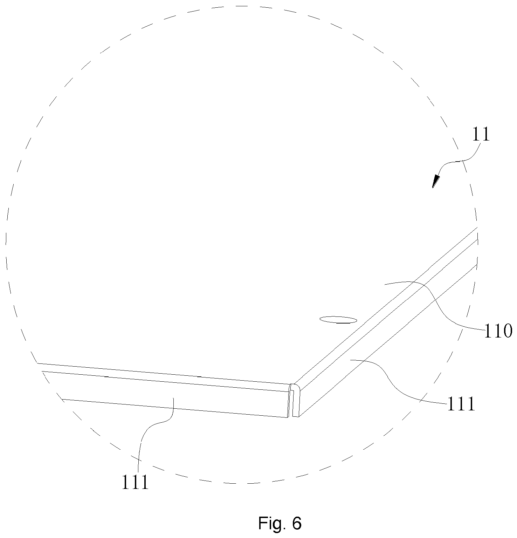

In some embodiments, as shown in Fig. 4, Fig. 6, Fig. 8 and Fig. 9, the outer frame 12 has a support plate 120 formed in its bottom. The support plate 120 has a first inner frame 130 and a second inner frame 140. The second inner frame 140 is between the first inner frame 130 and the outer frame 12. There are screw grooves 131 and 141 in the first inner frame 130 and the second inner frame 140. Such design makes the assembly of the panel light easier.

The diffusion layer 60 has its four peripheral edges pressing the support plate 120 thus the diffusion plate 60, the light guide plate 20 and the reflective layer 70 are confined in the housing 10. The heat dissipation structure 40 is placed on the support plate 120.

In some embodiment, as shown in Fig. 4 and Fig. 9, the support plate 120 has a protruding limiter 150. The heat dissipation structure 41 may move between the first inner frame 130 and the limiter 150.

In some embodiments, as shown in Fig. 1 to Fig. 3, the panel light also includes a driver (not shown) disposed on a back side of the back cover 11. The driver is connected to the light source 50 electrically. There is a driver box 80 disposed on the back cover 11 with screws. Driver circuits are placed in the driver box 80. Sensor circuit for determining whether the distance between the light guide plate and the light source may be placed in the driver box 80 while a sensor may be located on the stop unit.

## Claims

1. A panel light assembly, comprising:
a housing (10);
a light guide plate (20);
a light source (50) comprising a light source plate (51) and configured to emit a light passing through the light guide plate (20) via a light incidence side of the light guide plate (20);
a support base configured for mounting the light source (50);
a heat dissipation structure (40) fixed to a back side of the light source (50);a deformable unit comprising a first elastic unit (31) disposed between an inner side of a panel frame and a back side of the light source (50) and disposed between the heat dissipation structure (40) and an inner side of the housing (10); and
a stop piece (53) disposed on a front side of the light source plate (51) and configured for keeping at least a first distance between the light incidence side of the light guide plate (20) and the light source (50) when the light guide plate (20) thermally expands so that the light incidence side of the light guide plate (20) expands toward the light source (50),
**characterized in that**,
said deformable unit further comprises a second elastic unit (32) disposed between a front side of the light source (50) and the light guide plate (20);
wherein when the light guide plate (20) thermally expands and engages the second elastic unit (32), the second elastic unit (32) is deformed by the light guide plate (20) until the lateral side of the light guide plate (20) engages the stop piece (53) and the deformation of the first elastic unit (31) is larger than the deformation of the second elastic unit (32).

2. The panel light assembly according to claim 1, wherein the first elastic unit (31) and the second elastic unit (32) have elastic force, when there is no external force applying on the first elastic unit (31) or the second elastic unit (32), the first elastic unit (31) and the second elastic unit (32) presses the support base to keep the support base fixed at a predetermined position.

3. The panel light assembly according to claim 1 or 2, wherein the stop piece (53) is fixed on the support base, and when the light guide plate (20) expands, the light incidence side of the light guide plate (20) engages an edge of the stop piece (53) before engaging the light source (50).

4. The panel light assembly according to claim 3, wherein the stop piece (53) is fixed to the heat dissipation structure (40).

5. The panel light assembly according to claim 4, wherein the heat dissipation structure (40) has a wall side and a bottom side, the light source plate (51) is placed on the bottom side and pressing the wall side, and wherein there is a heat dissipation layer (52) between the wall side and the light source plate (51).

6. The panel light assembly according to any one of the preceding claims, wherein the light guide plate (20) has a lateral side facing the light source (50) and has a top side attaching to a reflective layer (70), the light guide plate (20) being configured to let light escape from a bottom side of the light guide plate (20).

7. The panel light assembly according to claim 6, wherein the reflective layer (70) has a heat dissipation unit, for guiding heat of the light guide plate (20) to a heat dissipation structure (40) of the support base.

8. The panel light assembly according to any one of the preceding claims, further comprising a diffusion layer (60) heat connected to the panel frame and a heat dissipation structure (40) of the support base.

9. The panel light assembly according to any one of the preceding claims, further comprising a groove for the support base to move inside the groove.

10. The panel light assembly according to any one of the preceding claims, wherein further comprising a distance sensor, when the first distance between the light guide plate (20) and the light source (50) is less than a threshold, the light source (50) is configured to be lower down an output light of the light source (50) through a driver, or adjacent LED modules of the light source (50) is configured to be turned on and turned off alternatively, through a driver.

11. The panel light assembly according to any one of the preceding claims, wherein the light source (50) has a first light source part and a second light source part facing to two sides of the light guide unit, and the first light source part and the second light source part is configured to be turned on and turned off alternatively, through a driver.

12. The panel light assembly according to any one of the preceding claims, wherein the first elastic unit (31) and the second elastic unit (32) comprise a spring, respectively.

## Patentansprüche

1. Plattenlichtanordnung, umfassend:
ein Gehäuse (10);
eine Lichtleitplatte (20);
eine Lichtquelle (50), die eine Lichtquellenplatte (51) umfasst und dafür konfiguriert ist, ein durch die Lichtleitplatte (20) über eine Lichteinfallseite der Lichtleitplatte (20) hindurchgehendes Licht auszustrahlen;
eine Stützbasis, die dafür konfiguriert ist, die Lichtquelle (50) zu montieren;
eine Wärmeabfuhrstruktur (40), die an einer Rückseite der Lichtquelle (50) befestigt ist;
eine verformbare Einheit, die eine erste elastische Einheit (31) umfasst, die zwischen einer Innenseite eines Plattenrahmens und einer Rückseite der Lichtquelle (50) angeordnet ist und zwischen der Wärmeabfuhrstruktur (40) und einer Innenseite des Gehäuses (10) angeordnet ist; und
ein Anschlagstück (53), das auf einer Vorderseite der Lichtquellenplatte (51) angeordnet und dafür konfiguriert ist, mindestens einen ersten Abstand zwischen der Lichteinfallseite der Lichtleitplatte (20) und der Lichtquelle (50) zu bewahren, wenn sich die Lichtleitplatte (20) thermisch ausdehnt, so dass sich die Lichteinfallseite der Lichtleitplatte (20) zur Lichtquelle (50) hin ausdehnt,
**dadurch gekennzeichnet, dass**
die verformbare Einheit ferner eine zweite elastische Einheit (32) umfasst, die zwischen einer Vorderseite der Lichtquelle (50) und der Lichtleitplatte (20) angeordnet ist;
wobei, wenn sich die Lichtleitplatte (20) thermisch ausdehnt und in die zweite elastische Einheit (32) eingreift, die zweite elastische Einheit (32) durch die Lichtleitplatte (20) verformt wird, bis die laterale Seite der Lichtleitplatte (20) in das Anschlagstück (53) eingreift und die Verformung der ersten elastischen Einheit (31) größer als die Verformung der zweiten elastischen Einheit (32) ist.

2. Plattenlichtanordnung nach Anspruch 1, wobei die erste elastische Einheit (31) und die zweite elastische Einheit (32) eine elastische Kraft aufweisen, wenn keine äußere Kraft vorliegt, die auf die erste elastische Einheit (31) oder die zweite elastische Einheit (32) ausgeübt wird, die erste elastische Einheit (31) und die zweite elastische Einheit (32) gegen die Stützbasis drücken, um die Stützbasis in einer vorbestimmten Position befestigt zu halten.

3. Plattenlichtanordnung nach Anspruch 1 oder 2, wobei das Anschlagstück (53) an der Stützbasis befestigt ist, und wenn sich die Lichtleitplatte (20) ausdehnt, die Lichteinfallseite der Lichtleitplatte (20) in eine Kante des Anschlagstücks (53) eingreift, bevor sie in die Lichtquelle (50) eingreift.

4. Plattenlichtanordnung nach Anspruch 3, wobei das Anschlagstück (53) an der Wärmeabfuhrstruktur (40) befestigt ist.

5. Plattenlichtanordnung nach Anspruch 4, wobei die Wärmeabfuhrstruktur (40) eine Wandseite und eine Bodenseite aufweist, die Lichtquellenplatte (51) auf der Bodenseite platziert ist und gegen die Wandseite drückt und wobei eine Wärmeabfuhrschicht (52) zwischen der Wandseite und der Lichtquellenplatte (51) vorliegt.

6. Plattenlichtanordnung nach einem der vorhergehenden Ansprüche, wobei die Lichtleitplatte (20) eine laterale Seite aufweist, die zur Lichtquelle (50) weist, und eine obere Seite aufweist, die an einer reflektierenden Schicht (70) angebracht ist, wobei die Lichtleitplatte (20) dafür konfiguriert ist, Licht aus einer Bodenseite der Lichtleitplatte (20) entweichen zu lassen.

7. Plattenlichtanordnung nach Anspruch 6, wobei die reflektierende Schicht (70) eine Wärmeabfuhreinheit zum Leiten von Wärme der Lichtleitplatte (20) zu einer Wärmeabfuhrstruktur (40) der Stützbasis aufweist.

8. Plattenlichtanordnung nach einem der vorhergehenden Ansprüche, ferner umfassend eine Diffusionsschicht (60) die mit dem Plattenrahmen und einer Wärmeabfuhrstruktur (40) der Stützbasis wärmeverbunden ist.

9. Plattenlichtanordnung nach einem der vorhergehenden Ansprüche, ferner umfassend eine Nut, um die Stützbasis in die Nut zu bewegen.

10. Plattenlichtanordnung nach einem der vorhergehenden Ansprüche, wobei ferner umfassend einen Abstandssensor, wenn der erste Abstand zwischen der Lichtleitplatte (20) und der Lichtquelle (50) unter einem Schwellenwert liegt, die Lichtquelle (50) dafür konfiguriert ist, ein Ausgangslicht der Lichtquelle (50) durch einen Treiber zu verringern, oder angrenzende LED-Module der Lichtquelle (50) dafür konfiguriert sind, durch einen Treiber alternativ ein- und ausgeschaltet zu werden.

11. Plattenlichtanordnung nach einem der vorhergehenden Ansprüche, wobei die Lichtquelle (50) ein erstes Lichtquellenteil und ein zweites Lichtquellenteil aufweist, die zu zwei Seiten der Lichtleiteinheit weisen, und das erste Lichtquellenteil und das zweite Lichtquellenteil dafür konfiguriert sind, durch einen Treiber alternativ ein- und ausgeschaltet zu werden.

12. Plattenlichtanordnung nach einem der vorhergehenden Ansprüche, wobei die erste elastische Einheit (31) und die zweite elastische Einheit (32) jeweils eine Feder umfassen.

## Revendications

1. Ensemble d'éclairage de panneau, comprenant :
un boîtier (10),
une plaque formant guide de lumière (20),
une source de lumière (50) comprenant une plaque de source de lumière (51) et configurée pour émettre de la lumière passant à travers la plaque formant guide de lumière (20) via un côté d'incidence de lumière de la plaque formant guide de lumière (20),
une embase de support configurée pour monter la source de lumière (50),
une structure de dissipation de chaleur (40) fixée à un côté arrière de la source de lumière (50),
une unité déformable comprenant un premier organe élastique (31) disposé entre un côté intérieur d'un cadre de panneau et un coté arrière de la source de lumière (50) et disposé entre la structure de dissipation de chaleur (40) et un côté intérieur du boîtier (10), et
une pièce d'arrêt (53) disposée sur un côté avant de la plaque de source de lumière (51) et configurée pour maintenir au moins une première distance entre le côté d'incidence de lumière de la plaque formant guide de lumière (20) et la source de lumière (50) lorsque la plaque formant guide de lumière (20) se dilate thermiquement de telle manière que le côté d'incidence de lumière de la plaque formant guide de lumière (20) se dilate vers la source de lumière (50),
**caractérisé en ce que**
ladite unité déformable comprend en outre un deuxième organe élastique (32) disposé entre un côté avant de la source de lumière (50) et la plaque formant guide de lumière (20),
dans lequel, lorsque la plaque formant guide de lumière (20) se dilate thermiquement et met en prise le deuxième organe élastique (32), le deuxième organe élastique (32) est déformé par la plaque formant guide de lumière (20) jusqu'à ce que le côté latéral de la plaque formant guide de lumière (20) vienne en prise avec la pièce d'arrêt (53) et la déformation du premier organe élastique (31) est supérieure à la déformation du deuxième organe élastique (32).

2. Ensemble d'éclairage de panneau selon la revendication 1, dans lequel le premier organe élastique (31) et le deuxième organe élastique (32) présentent une force élastique, et lorsqu'il n'y a aucune force externe appliquée sur le premier organe élastique (31) ou le deuxième organe élastique (32), le premier organe élastique (31) et le deuxième organe élastique (32) pressent l'embase de support pour maintenir l'embase de support fixée à une position prédéterminée.

3. Ensemble d'éclairage de panneau selon la revendication 1 ou 2, dans lequel la pièce d'arrêt (53) est fixée sur l'embase de support, et lorsque la plaque formant guide de lumière (20) se dilate, le côté d'incidence de lumière de la plaque formant guide de lumière (20) vient en prise avec un bord de la pièce d'arrêt (53) avant de venir en prise avec la source de lumière (50).

4. Ensemble d'éclairage de panneau selon la revendication 3, dans lequel la pièce d'arrêt (53) est fixée à la structure de dissipation de chaleur (40).

5. Ensemble d'éclairage de panneau selon la revendication 4, dans lequel la structure de dissipation de chaleur (40) a un côté de paroi et un côté de fond, la plaque de source de lumière (51) est placée sur le côté de fond et presse le côté de paroi, et dans lequel il y a une couche de dissipation de chaleur (52) entre le côté de paroi et la plaque de source de lumière (51).

6. Ensemble d'éclairage de panneau selon l'une quelconque des revendications précédentes, dans lequel la plaque formant guide de lumière (20) a un côté latéral faisant face à la source de lumière (50) et a un côté supérieur relié à une couche réfléchissante (70), la plaque formant guide de lumière (20) étant configurée pour laisser de la lumière se diffuser à partir d'un côté de fond de la plaque formant guide de lumière (20).

7. Ensemble d'éclairage de panneau selon la revendication 6, dans lequel la couche réfléchissante (70) comporte une unité de dissipation de chaleur pour guider de la chaleur de la plaque formant guide de lumière (20) jusqu'à une structure de dissipation de chaleur (40) de l'embase de support.

8. Ensemble d'éclairage de panneau selon l'une quelconque des revendications précédentes, comprenant en outre une couche de diffusion (60) connectée thermiquement au cadre de panneau et à une structure de dissipation de chaleur (40) de l'embase de support.

9. Ensemble d'éclairage de panneau selon l'une quelconque des revendications précédentes, comprenant en outre une rainure permettant de déplacer l'embase de support à l'intérieur de la rainure.

10. Ensemble d'éclairage de panneau selon l'une quelconque des revendications précédentes, dans lequel comprenant en outre un capteur de distance, lorsque la première distance entre la plaque formant guide de lumière (20) et la source de lumière (50) est inférieure à un seuil, la source de lumière (50) est configurée pour diminuer une émission lumineuse de la source de lumière (50) par l'intermédiaire d'un circuit de commande ou des modules DEL adjacents de la source de lumière (50) sont configurés pour être allumés et éteints alternativement, par l'intermédiaire d'un circuit de commande.

11. Ensemble d'éclairage de panneau selon l'une quelconque des revendications précédentes, dans lequel la source de lumière (50) comprend une première partie de source de lumière et une deuxième partie de source de lumière faisant face à deux côtés de l'unité de guide de lumière, et la première partie de source de lumière et la deuxième partie de source de lumière sont configurées pour être allumées et éteintes alternativement, par l'intermédiaire d'un circuit de commande.

12. Ensemble d'éclairage de panneau selon l'une quelconque des revendications précédentes, dans lequel le premier organe élastique (31) et le deuxième organe élastique (32) comprennent respectivement un ressort.
